# EUROPEAN PATENT SPECIFICATION

(11) **EP 2 833 081 B1**
(45) Date of publication and mention of the grant of the patent: **10.05.2017**
(21) Application number: 14179144.2
(22) Date of filing: 30.07.2014
(51) Int. Cl.: F24H 9/00, F24H 9/18, F24H 3/04, F24H 3/00, F24H 9/20, H05B 3/16, F24H 3/02, G01K 1/16, G01K 13/00

(54) **Forced air heater**
Zwangsumlauferhitzer
Réchauffeur d'air forcé

(30) Priority: 30.07.2013 US 201361859965 P
(43) Date of publication of application: 04.02.2015
(73) Proprietor: Caframo Limited, Wiarton, ON N0H 2T0 (CA)
(72) Inventor: Pourvash, Mojtaba, Port Washington, WI (US)
(74) Representative: Wynne-Jones, Lainé and James LLP

(56) References cited:
- CH-A- 466 528
- US-A- 5 513 296
- US-A1- 2004 120 700
- US-A1- 2008 124 060
- US-A1- 2008 240 689
- US-A1- 2012 304 977

## Description

### FIELD

The present disclosure relates generally to forced air heaters with or without thermostats.

### BACKGROUND

Conventional heaters typically generate and disseminate (distribute) heat by forced convection, that is, by blowing air over a heat source, and in particular by blowing air parallel to the base and extended surfaces of the heat source. This method of heat generation and dissemination is not always effective. Conventional heaters may lack sufficient heat distribution per given area in heating appliances. There may also be a lack of sufficient heat extraction from positive temperature coefficient (PTC) based heat source assemblies per given area of heat distributers in conventional heating appliances.

Further, restrictions in the discharged airflow dynamics in conventional heating appliances may lead to non-uniform heating and creating large temperature gradients in spaces and/or objects to be heated associated with the heater, leading to the reduction of the heat source's ability to generate and/or distribute heat. Conventional heaters may have limited operational and functional reliability. Conventional heaters may have a large physical size and may have ineffective heat distribution.

Conventional heaters also typically include a thermostat having a temperature sensor exposed to the environment in order to sense the temperature of the surrounding environment. This is generally used to allow the heater to turn off/on based on the temperature in the surrounding environment. In these conventional heating devices there may be an unnecessarily large number of thermostat cycling as a result of the thermostat's quick response to temperature changes due to relative low thermal mass of the thermostat's electrical contacts. Unnecessary thermostat cycling may shorten the life of the thermostat. An excessive amount of cycling may not allow objects to be heated which are associated with the heater or in the space serviced by the heater to reach a desired target temperature. When the life of thermostat is compromised with unnecessary thermostat cycling, this can also decrease the reliability of the heater.

Additionally, conventional heating appliances with excessive cycling may have a high thermostat contact temperature at startup due to high startup electrical current. Again, the excessive and unnecessary cycling of a thermostat can result in reduced thermostat service life.

US2008/124060 discloses a PTC airflow heater which includes an air source to generate a flow of air towards the PTC heat generator.

US2008/240689 discloses a portable heating system having at least one fan that causes air to move from the air inlet past the heating elements.

CH466528 discloses a hot-air heater with an axially cascaded blower. More precisely, this document discloses a forced air heater comprising a heating element and at least two air movers directing air towards the heating element, wherein at least one air mover directs the air at a different angle relative to the directed air of at least one other air mover, whereby each air mover directs the air to provide impinged airflow at an acute angle relative to the heating element.

US5513296 discloses a PTC heater which includes a fan mounted within a housing wherein the fan creates an air flow into the heater.

US2004/120700 discloses an electric heater having two interior spaces wherein the first housing may include at least one electric heating element and the second interior space may include an air circulator such as a blower.

US2012/304977 discloses an integrated structure for an air heater having an air blowing unit.

It is, therefore, desirable to provide an improved heater.

### SUMMARY

It is an object of the present disclosure to obviate or mitigate at least one disadvantage of conventional forced air heaters.

There is provided a forced air heater having impingement airflow heat transfer from a heat source. In some cases, the heat source is a positive temperature coefficient (PTC) heat source.

According to the invention, there is provided a forced air heater including: a heating element; a heat sink mounted on the heating element; and at least two air movers directing air towards the heating element, wherein at least one air mover directs the air at a different angle relative to the directed air of at least one other air mover, each air mover directs the air to provide impinged airflow at an acute angle relative to the heating element, and each of the at least two air movers directs air towards the heating element from an opposite side of the heating element.

In a particular case, the heat sink has at least one extended surface extending approximately in the direction of the air directed from the air mover.

In a further particular case, the angle of impingement is between 30 and 60 degrees relative to the heating element.

In a particular case, the heating element is a positive temperature coefficient (PTC) heating element.

In a particular case, the heating element and the heat sink are configured to direct air that contacts the heating element or the heat sink in multiple directions out of a body of the heater.

In a particular case, the heater of claim 1, further comprising a temperature sensing device wherein the temperature sensing device is thermally coupled with a solid heat-conductive object in the environment to be heated.

In a particular case, the temperature sensing device includes: a sensing plate mounted on the solid heat-conductive object in the environment to be heated; and an electrical contact connected to the sensing plate, wherein the electrical contact is thermally coupled with the heat-conductive object via the sensing plate.

Other aspects and features of the present disclosure will become apparent to those ordinarily skilled in the art upon review of the following description of specific embodiments in conjunction with the accompanying figures.

### BRIEF DESCRIPTION OF THE DRAWINGS

Embodiments of the present disclosure will now be described, by way of example only, with reference to the attached Figures.
Figure 1 is a perspective view of a forced air heater, in accordance with an embodiment;
Figure 2 is a cutout view of the heater of Figure 1;
Figure 3 is an exploded view of the heater of Figure 1;
Figure 4 is a schematic diagram of impinged airflow;
Figure 5 is a schematic diagram of parallel airflow;
Figure 6 is a schematic diagram of angled impinged airflow; and
Figure 7 is a schematic diagram of impinged airflow with multiple incoming air streams.
Figure 8 is a flowchart of a method of controlling a heater.

### DETAILED DESCRIPTION

Generally, the present disclosure provides an improved forced air heater and more specifically to an impingement heater.

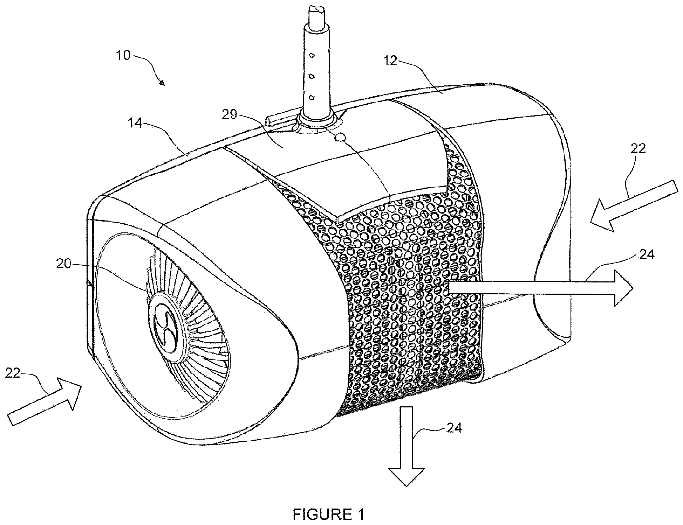

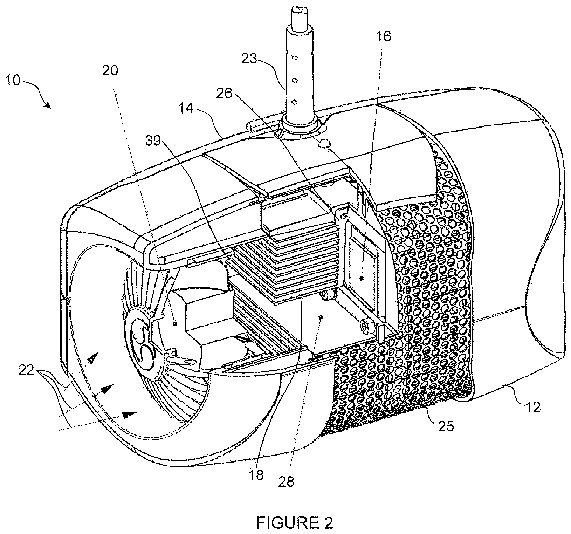

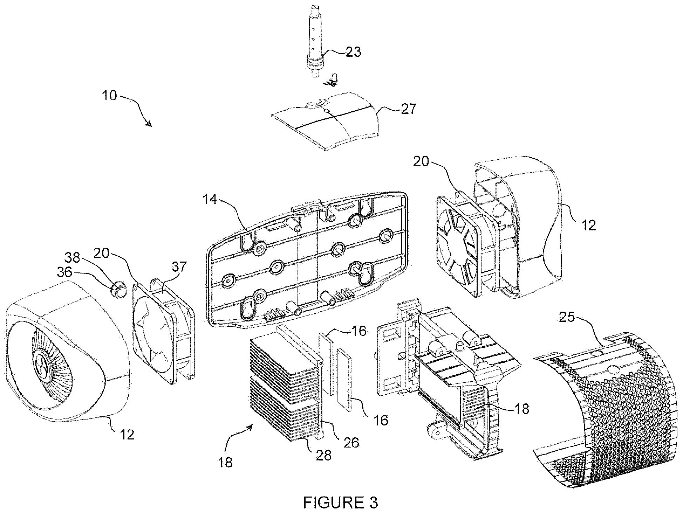

Figure 1 illustrates a heater 10, in accordance with an embodiment. The heater 10 has a cover 12 and a heater base 14 for supporting the heater 10 and optionally attaching to a surface (not shown) such as a wall. Figure 2 illustrates a cutout view of the heater 10 and Figure 3 illustrates an exploded view of the heater 10. The heater 10 includes at least one heating element 16, at least one heat sink 18, and air moving devices 20. The air moving devices 20 may be fans, blowers, or the like. A power connection 23 provides electrical power to the heating element 16 and air moving devices 20. The heater 10 may also have a protective cover 25 for blocking accidental contact with the heat sink 18 or other internal components.

The heat sink 18 has a base 26 and extended surfaces or fins 28. The base 26 is mounted on the heating element 16 and the extended surfaces 28 project away from the base 26. In the example of Figure 3, the extended surfaces 28 have a planar shape; however, the extended surfaces 28 may have any suitable shape, for example, a triangular shape, a curved shape, or the like. The air moving device 20 directs cool air at an angle, in this case perpendicular, to the base 26 and the surface of the heating element 16, and across the extended surfaces 28.

Figure 1 also illustrates airflow into and out of the heater 10. The air moving devices 20 draw in cool air 22 and direct the cool air 22 to the heat sink 18. The heated air 24 then passes from the area of the heat sink 18 and out through the protective cover 25. In some cases, in order to limit exit of the heated air from one side of the heater, for example, the top and divert it towards the bottom, the heater 10 may include a cover 29 to direct heated air 24 downward.

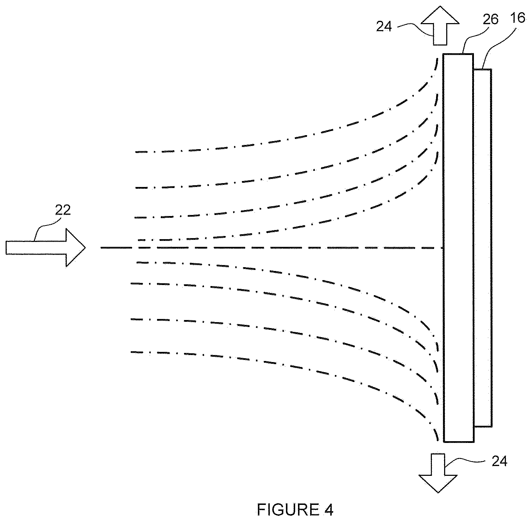

Figure 4 illustrates airflow over the base 26 of the heat sink 18. In this orientation, the air impinges on the heat sink 18. Impingement generally refers to the condition whereby the airflow collides with a surface at relatively significant airflow velocity. In circumstances where the impinged airflow is induced by an air mover, impingement may occur where the airflow strikes a surface and diverts after the collision. As the air impinges, a higher amount of heat is transferred to the ambient air than would be the case with parallel airflow. It is intended that the impinged airflow enhances the heat transfer coefficient of the heat sink 18.

The impinged airflow may provide versatility in discharging airflow dynamics. Discharged impinged airflow 24 may be diverted to multiple directions such as out of the sides, top, and bottom of the heater 10. With warm air exiting in multiple directions, the air in the environment and heat-conductive solid objects in the environment are intended to become more uniformly heated preventing or reducing large temperature gradients in the environment or solid objects in the environment. The term "solid objects in the environment" is intended to refer to thermal masses that may be present in the area or environment to be heated other than the general air or gas in the environment and may include liquids or liquid-containing objects.

In an embodiment, the heat sink 18 may alternatively include a cross-cut heat distributer or a Pin Fin distributer in which the extended surfaces 28 of the heat sink 18 have cross-cuts to allow airflow perpendicular to the extended surfaces. In this case, the discharged airflow may be directed in additional directions along axes normal to the direction of the flow. The omni-directionality of the heater 10 allows for thermal mixing in the environment and is intended to provide more uniform thermal distribution of air in the environment.

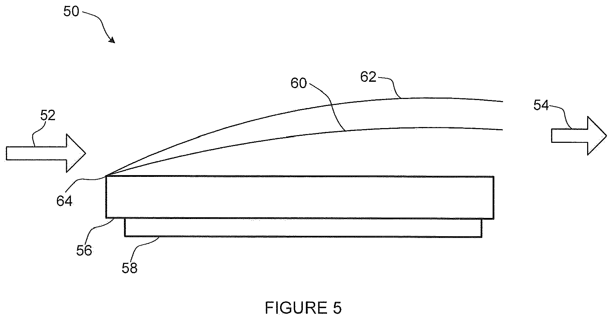

Figure 5 illustrates airflow 50 for a conventional heater. The conventional heater has an incoming airflow 52 and an outgoing airflow 54 parallel to a surface of a heat sink 56. The amount of outgoing air 54 may be equal to the incoming air 52 while the temperature of the airflows 52, 54 is different. The heat sink 56 has a base on a heating element 58. The incoming airflow 52 is at a different temperature than that of the heat sink 56. A thermal boundary layer 60 and a velocity boundary layer 62 are formed on the heat sink 56. The thickness of the boundary layers 60, 62 increases with the distance from a leading edge 64 of the heat sink 56.

In contrast, in impinged airflow, as described herein, the thermal and hydraulic boundary layers are generally broken at the point of contact and the local heat transfer coefficients are increased. It is intended that this results in higher heat transfer compared with conventional parallel flow.

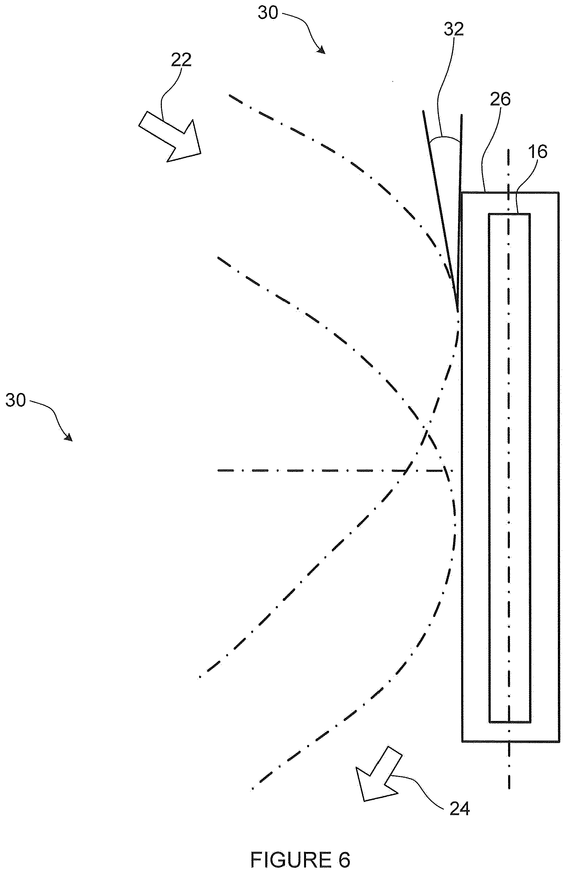

The angle of impingement need not be exactly perpendicular to the base 26. For example, Figure 6 illustrates airflow 30 at an angle 32 to the base 26. The impingement angle 32 may vary depending on design criteria and parameters. It will be understood that the impingement angle 32 is greater than zero degrees from parallel to the base, such that there is some impinged airflow. The impingement angle 32 will generally be selected based on the desired application. For example, possible angles may include 90 degrees, 60 degrees, 45 degrees, 30 degrees, between 60 and 30 degrees, between 50 and 40 degrees, or the like. It is intended that an impingement angle 32 less than 90 degrees may reduce back pressure caused by the impinged airflow 30. In some cases, an angle between 50 and 40 degrees, and particularly 45 degrees, may produce sufficient impinged airflow 30 with less back pressure. In some cases, there may be more than two air movers, each directing air towards the heating element at a different angle.

The embodiment of figure 6 illustrates airflow 30 impingement without the use of extended surfaces 28. In further embodiments, airflow 30 may be provided at an angle 32 to the base 26 where the base 26 includes extended surfaces 28. In some cases, the extended surfaces 28 may be configured to extend away from the base 26 at a corresponding angle to the airflow 30 such that the extended surfaces 28 extend approximately towards the airflow 30. Having the extended surfaces 28 extend approximately towards the airflow 30 may further help reduce back pressure related to the impinged airflow 30. In other cases, the extended surfaces 28 may be configured to extend perpendicular to the base 26 regardless of the angle of the airflow 30.

In some cases, the heating element 16 may be a positive temperature coefficient (PTC) heating element. Where a PTC heating element 16 is the heat source, an increase in heat removal translates to a higher heat output, which may increase heat extraction. The PTC heating element self-regulates as the output of the PTC heater depends on the temperature encountered by the PTC heater. As heat is extracted from the PTC heating element 16 by the impinged airflow 30, the PTC heating element 16 will draw more power to provide more heat compared to conventional heaters. The additional heat can then be removed by subsequent impinged airflow 30 directed at the heating element 16. Therefore, with use of PTC heating elements, it is intended that impinged airflow heat transfer increases heat distribution and extracts a higher amount of heat out of the heating elements.

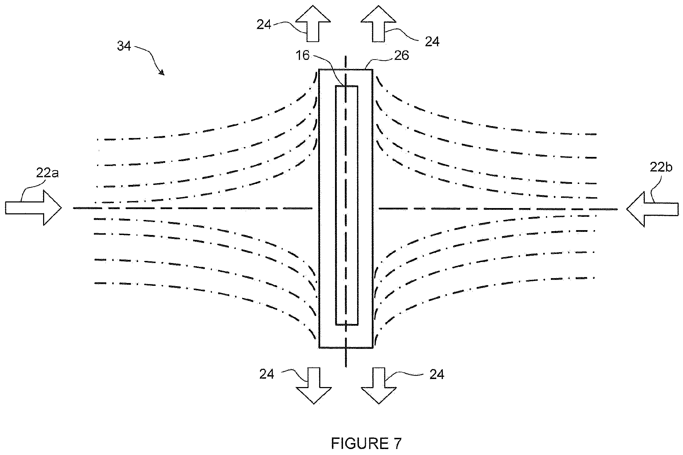

Figure 7 illustrates airflow 34 for multiple air movers 20 providing multiple incoming air streams 22a, 22b, in accordance with an embodiment. Incoming airflow 22a, 22b, is induced by the air movers 20, passes over the heat sink base 26 and heated air 24 flows out. Reliability of the cooling and heating appliances may be improved by using multiple heating elements 16, heat sinks 18 and/or air movers 20 in impingement cooling and heating technology. The airflow redundancy is intended to provide sufficient airflow for safe and effective operation of the heater 10. For example, if one air mover 20 fails the other(s) may continue and prevent failure.

In some applications, the heater 10 may be used where heating failure is not desirable. The reliability of the designed system generally increases with the number of air moving devices 20.

Multi-directionality of airflow may also aid in heat distribution. Multiple air movers 20 and the use of the impingement technology described herein is intended to provide comparable performance to those of conventional heaters but with smaller footprints. This becomes important for applications where there is limited space, such as in marine applications. Where the heater 10 has a plurality of air moving devices 20 there is intended to be an increase in heat distribution and heat extraction as well as an increase in reliability of the heater.

Airflow redundancy may also include targeting the heating element 16, and/or a heat sink 18 provided thereto, from different sides and directions. This is intended to translate into further heat removal and higher heat distribution to the ambient air. The number of air moving devices is not limited to two but could be any appropriate number greater than two and the direction of airflow could be from multiple sides and angles.

Referring again to Figure 3, the heater 10 in this embodiment has a temperature sensing device or thermostat 36 as part of a temperature control system. In this embodiment, the thermostat 36 includes and is connected to the heater 10 by a sensing plate 38. In the example of Figure 3, the thermostat sensing plate 38 may be connected to a solid component or body 37 of the air mover 20. In particular, in this case a metallic body 37. The thermostat's electrical contacts on the sensing plate 38 of the thermostat 36 are basically heat sunk to the body 37. In further cases, the thermostat sensing plate 38 may be connected to other solid components of the heater 10. In other embodiments, the temperature sensing device 36 may be configured such that the thermostat sensing plate 38 may be connected to a solid object which is external to the heater 10; for example, in the environment to be heated, such as connected to a metallic engine block. The connection is intended to make the temperature sensing device 36 be in thermal communication with the solid object. In some cases, the object may be metal, metallic, heat-conducting polymers, water, skin tissue, or the like.

The thermal mass of the thermostat's electrical contacts when in contact with the body 37 is larger than that of the electrical contacts of the thermostat 36 when left in free air and as such the thermostat 36 may not respond as quickly to changes in temperature. Connecting the thermostat 36 to the body 37 increases the thermal mass but also heat sinking the contacts. Heat sinking the contacts is intended to thereby reduce the cycling of the thermostat 36 and prolong the life of the thermostat 36. Further, positioning the thermostat on a metallic body 37 is intended to provide more realistic temperature sensing in a situation where a solid object is being heated, such as, for example, heating an engine in a marine vehicle. This arrangement is intended to allow targeted objects to be heated faster and reach a desired target temperature faster and reduce the number of thermostat cycles.

Thermally coupling the thermostat 36 to the body 37 is intended to enhance the thermostat's sensing capability, reduce excessive cycling, lengthen the on-time duration of cycles, and reduce the thermostat's contact temperature at startup. These improvements may increase the service life of the thermostat 36 and the temperature control system, thus increasing reliability of the heater 10.

In conventional systems, where the temperature control system is designed to sense air temperature, the system's thermostat may react quickly in response to temperature changes and frequently activate and de-activate the heating system, with a short on-off cycle time. In this case, the contacts of the thermostat could become excessively hot due to frequent start-ups, which may shorten the life of the thermostat and decrease reliability of the heater. In addition, short cycle duration may not allow solid objects in the environment, which may already be lagging thermally, to absorb the energy required to reach a desired temperature.

With the thermostat 36 described herein, the temperature that is sensed is the temperature of a solid object 37 which is generally more settled and dampened in fluctuation than the surrounding air. By placing the thermostat 36 in contact with the metallic body 37, at startup, the heat that is generated in the thermostat's contacts is sinked and quickly distributes onto the metal body 37, protecting the thermostat 36 against excessive heat and prolonging its service life.

In some cases, the thermostat 36 may be sealed such that the thermostat 16 is not exposed to the surrounding environment. Having the thermostat 36 sealed is intended to protect the thermostat 36 from the hazardous environment and vice versa. In an example, where the heater 10 is located in an engine compartment, it is intended that a hermetically sealed thermostat 36 will be incapable of creating an exposed electrical arc that can react with fuel fumes in the compartment as the thermostat 36 is not in contact with the surrounding environment.

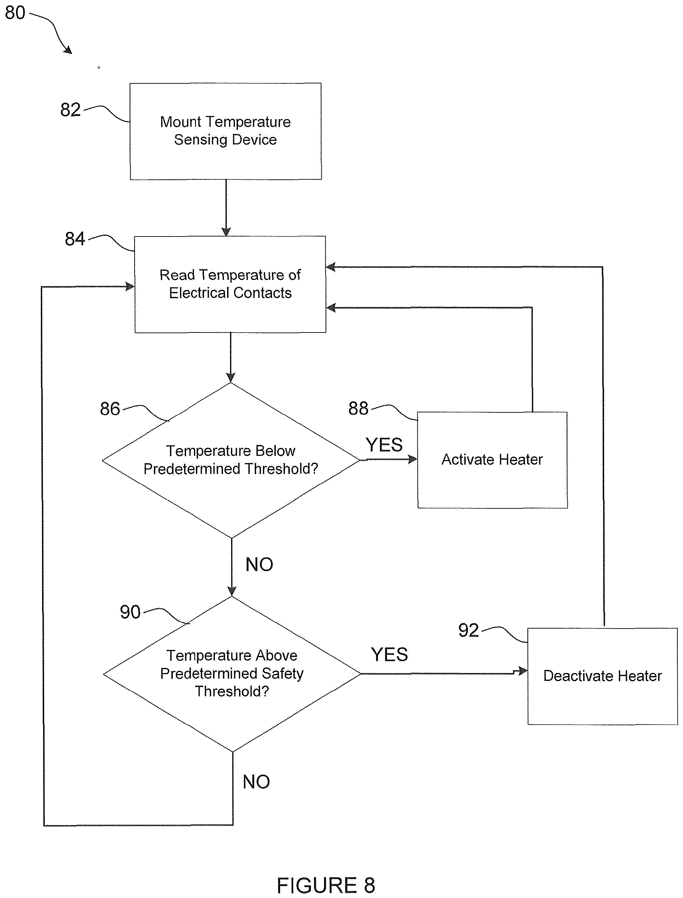

Figure 8 shows a method 80 of controlling a heater according to an embodiment. At 82, a temperature sensing device 36 is mounted to the heater 10. The electrical contacts of the temperature sensing device 36 are heat sunk to a metal body 37 of the heater 10. During operation, flow of electrical current through the electrical contacts of the temperature sensing device 36 causes them to heat up. However, the temperature increase is mitigated since the electrical contacts are thermally coupled to the metal body 37 that allows the heat to quickly distribute through the larger thermal mass body of the metal body 37.

The cycling of the heater is then controlled by a controller. The controller may be, for example, a processor, microcontroller, programmable logic controller (PLC), a mechanical temperature control and/or regulating device, or the like. The controller 902 may be connected to, or form part of, another system; for example, an engine control unit. At 84, the controller reads the temperature readings provided by the heat sunk electrical contacts. At 86, the controller determines whether the temperature of the electrical contact readings are below a predetermined temperature threshold. At 88, if the temperature reading was below the predetermined temperature threshold, the controller activates the heater 10. At 90, the controller determines whether the temperature of the electrical contact readings is above a predetermined safety temperature threshold. At 92, if the temperature reading was above the predetermined safety temperature threshold, the controller deactivates the heater 10. In further embodiments, particularly where the heating element is self-regulating, the controller may not perform a determination with regard to the predetermined safety threshold at 90. In this case, if the temperature is not below the predetermined temperature threshold at 86, the controller will return to reading the temperature of the electrical contacts at 84.

In some cases, the heater 10 may be configured to operate at a temperature below the auto-ignition temperature of fuel fumes in the surrounding environment. This configuration may be accomplished by, for example, selecting a predetermined safety temperature threshold below the auto-ignition temperature, selecting a self-regulating heating element that operates below the auto-ignition temperature, or the like. It is intended that operating at a temperature below the auto-ignition temperature can prevent explosions or the like.

In a particular application, the heater 10 may be used in marine applications to maintain a desirable (e.g. above freezing) temperature in a particular environment or for a particular solid object in the environment, for example, an engine compartment or engine. In this case, the heater may provide improved fail-safe heating for an object (e.g. a boat engine) having a large thermal mass in a small space.

In an aspect, the present disclosure provides a heater having impingement airflow onto a heat sink with extended surfaces which is intended to increase heat transfer from a heat source to the ambient air by enhancing the heat transfer coefficient.

In an aspect, the present disclosure provides a heater having impingement airflow onto a PTC heat source assembly intended to increase heat extraction from PTC heating elements by increasing the rate of heat removal from the PTC and transferring it to the ambient.

In another aspect, the present disclosure provides a heater having a plurality of air moving devices (fans, blowers, etc.) intended to increase heat distribution, heat extraction, and reliability.

In yet another aspect, the present disclosure provides a heater having impingement airflow onto a heat source and heat sink assembly, and multiple air moving devices intended to enhance heat removal and heat extraction.

An intended advantage of the present disclosure is that the heater configuration provides improved heat extraction which may allow smaller components to be used. As well, a multiple fan configuration allows for a redundant ignition proof heater with omni-directional airflow smaller than conventional heater systems.

An intended advantage of the thermal mass thermostat configuration is that it allows the thermostat to be a better thermal proxy for components, for example those in an engine compartment, to protect the components from freezing, without the typically frequent thermostat cycling of conventional systems.

In the preceding description, for purposes of explanation, numerous details are set forth in order to provide a thorough understanding of the embodiments. However, it will be apparent to one skilled in the art that these specific details may not be required. In other instances, well-known structures and circuits are shown in block diagram form in order not to obscure the understanding. For example, specific details are not provided as to whether the embodiments described herein are implemented as a software routine, hardware circuit, firmware, or a combination thereof.

Embodiments of the disclosure can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device, and can interface with circuitry to perform the described tasks.

The above-described embodiments are intended to be examples only. Alterations, modifications and variations can be effected to the particular embodiments by those of skill in the art. The scope of the claims should not be limited by the particular embodiments set forth herein, but should be construed in a manner consistent with the specification as a whole.

## Claims

1. A forced air heater (10) comprising:
a heating element (16);
a heat sink (18) mounted on the heating element; and
at least two air movers (20) directing air towards the heating element, wherein at least one air mover directs the air at a different angle relative to the directed air of at least one other air mover, each air mover directs the air to provide impinged airflow at an acute angle relative to the heating element, and each of the at least two air movers direct air towards the heating element from an opposite side of the heating element.

2. The heater of claim 1, wherein the heat sink has at least one extended surface (28) extending approximately in the direction of the air directed from the air mover.

3. The heater of claim 1, wherein the angle of impingement is between 30 and 60 degrees relative to the heating element.

4. The heater of claim 1, wherein the heating element is a positive temperature coefficient (PTC) heating element.

5. The heater of claim 1, wherein the heating element and the heat sink are configured to direct air that contacts the heating element or the heat sink in multiple directions out of a body of the heater.

6. The heater of claim 1, further comprising a temperature sensing device wherein the temperature sensing device (36) is thermally coupled with a solid heat-conductive object in the environment to be heated.

7. The heater of claim 6, wherein the temperature sensing device comprises:
a sensing plate (38) mounted on the solid heat-conductive object in the environment to be heated; and
an electrical contact connected to the sensing plate,
wherein the electrical contact is thermally coupled with the heat-conductive object via the sensing plate.

## Patentansprüche

1. Umlufterhitzer (10), umfassend ein Heizelement (16), eine Wärmesenke (18), die auf dem Heizelement angebracht ist, und wenigstens zwei Luftbewegungseinrichtungen (20), die Luft gegen das Heizelement lenken, wobei wenigstens eine Luftbewegungseinrichtung die Luft in einem Winkel lenkt, die sich in Bezug auf die gelenkte Luft der wenigstens einen anderen Luftbewegungseinrichtung unterscheidet, wobei jede Luftbewegungseinrichtung die Luft so lenkt, daß ein Luftstrom entsteht, der unter einem spitzen Winkel bezüglich des Heizelementes auftrifft, und wobei jede der wenigstens zwei Luftbewegungseinrichtungen Luft gegen das Heizelement von einer entgegengesetzten Seite des Heizelementes lenkt.

2. Erhitzer nach Anspruch 1, **dadurch gekennzeichnet, daß** die Wärmesenke wenigstens eine ausgedehnte Oberfläche (28) aufweist, die sich nahezu in Richtung der von der Luftbewegungseinrichtung gelenkten Luft erstreckt.

3. Erhitzer nach Anspruch 1, **dadurch gekennzeichnet, daß** der Auftreffwinkel in Bezug auf das Heizelement zwischen 30 und 60 ° beträgt.

4. Erhitzer nach Anspruch 1, **dadurch gekennzeichnet, daß** das Heizelement ein Heizelement mit einem positivem Temperaturkoeffizienten (PTC) ist.

5. Erhitzer nach Anspruch 1, **dadurch gekennzeichnet, daß** das Heizelement und die Wärmesenke so gestaltet sind, daß Luft, die das Heizelement oder die Wärmesenke kontaktiert, in vielen Richtungen aus einem Körper des Erhitzers gelenkt wird.

6. Erhitzer nach Anspruch 1, ferner **gekennzeichnet durch** eine Temperaturfühlervorrichtung (36), die thermisch mit einem festen wärmeleitenden Gegenstand in der zu erwärmenden Umgebung gekoppelt ist.

7. Erhitzer nach Anspruch 6, **dadurch gekennzeichnet, daß** die Temperaturfühlervorrichtung eine Fühlerplatte (38) aufweist, die auf dem festen wärmeleitenden Gegenstand in der zu erwärmenden Umgebung angebracht ist, sowie einen elektrischen Kontakt, der mit der Fühlerplatte verbunden ist und der mit dem wärmeleitenden Gegenstand über die Fühlerplatte thermisch gekoppelt ist.

## Revendications

1. Réchauffeur d'air forcé (10) comprenant :
un élément chauffant (16) ;
un dissipateur de chaleur (18) monté sur l'élément chauffant ; et
au moins deux appareils aérauliques (20) dirigeant de l'air vers l'élément chauffant, au moins un appareil aéraulique dirigeant l'air à un angle différent par rapport à l'air dirigé d'au moins un autre appareil aéraulique, chaque appareil aéraulique dirigeant l'air pour fournir un écoulement d'air incident à un angle aigu par rapport à l'élément chauffant, et chacun parmi les au moins deux appareils aérauliques dirigeant de l'air vers l'élément chauffant à partir d'un côté opposé de l'élément chauffant.

2. Réchauffeur selon la revendication 1, dans lequel le dissipateur de chaleur a au moins une surface étendue (28) s'étendant approximativement dans la direction de l'air dirigé à partir de l'appareil aéraulique.

3. Réchauffeur selon la revendication 1, dans lequel l'angle d'incidence est entre 30 et 60 degrés par rapport à l'élément chauffant.

4. Réchauffeur selon la revendication 1, dans lequel l'élément chauffant est un élément chauffant à coefficient de température positif (PTC).

5. Réchauffeur selon la revendication 1, dans lequel l'élément chauffant et le dissipateur de chaleur sont configurés pour diriger de l'air qui entre en contact avec l'élément chauffant ou le dissipateur de chaleur dans de multiples directions hors d'un corps du réchauffeur.

6. Réchauffeur selon la revendication 1, comprenant en outre un dispositif de détection de température, le dispositif de détection de température (36) étant couplé thermiquement à un objet solide conducteur de chaleur dans l'environnement à chauffer.

7. Réchauffeur selon la revendication 6, dans lequel le dispositif de détection de température comprend :
une plaque de détection (38) montée sur l'objet solide conducteur de chaleur dans l'environnement à chauffer ; et
un contact électrique relié à la plaque de détection,
le contact électrique étant couplé thermiquement à l'objet conducteur de chaleur par l'intermédiaire de la plaque de détection.
